Europäisches Patentamt

European Patent Office

Office européen des brevets

(11) Veröffentlichungsnummer: **0 480 448 A1**

## (12) EUROPÄISCHE PATENTANMELDUNG

(21) Anmeldenummer: **91117363.1**

(22) Anmeldetag: **11.10.91**

(51) Int. Cl.5: **C08G 14/08**, C09J 161/34

(30) Priorität: **11.10.90 CS 4935/90**

(43) Veröffentlichungstag der Anmeldung:
**15.04.92 Patentblatt 92/16**

(84) Benannte Vertragsstaaten:
**AT BE DE IT NL**

(71) Anmelder: **CHEMKO, S.P.**

**Strazske(CS)**

(72) Erfinder: **Lipka, Radislav**
**Komenského 30**
**Michalovce(CS)**

(74) Vertreter: **Patentanwälte Beetz - Timpe -**
**Siegfried - Schmitt-Fumian- Mayr**
**Steinsdorfstrasse 10**
**W-8000 München 22(DE)**

(54) **Leime auf der Basis von Harnstoff-Formaldehyd-Kondensationsprodukten der Formaldehyd-Emissionsklasse E-O sowie ihre Herstellung und Verwendung.**

(57) Die Erfindung betrifft neuartige Leime, insbesondere zur Herstellung von Spanplatten, auf der Basis von Harnstoff-Formaldehyd-Kondensationsprodukten, die der Formaldehyd-Emissionsklasse E-0 entsprechen, Verfahren zu ihrer Herstellung sowie ihre Verwendung zur Herstellung von agglomerierten Werkstoffen, Verbundmaterialien und insbesondere Spanplatten.

Das Verfahren umfaßt folgende Schritte:
(A) Herstellung eines Vorkondensationsprodukts durch Umsetzung
- eines Phenol-Formaldehyd-Kondensationsprodukts
  mit
- Formaldehyd,
- Harnstoff
  und
- Trimethyloltrimethylentriamin,
(B) erste Nachkondensation des Vorkondensationsprodukts bei erhöhter Temperatur
und
(C) zweite Nachkondensation des in Schritt B erhaltenen Kondensationsprodukts bei erhöhter Temperatur unter Zusatz von Harnstoff sowie von Phenol-Formaldehyd-Kondensationsprodukt.

EP 0 480 448 A1

Die Erfindung betrifft neuartige Leime auf der Basis von Harnstoff-Formaldehyd-Kondensationsprodukten der Formaldehyd-Emissionsklasse E-0, Verfahren zu ihrer Herstellung sowie ihre Verwendung und damit hergestellte Produkte, insbesondere agglomerierte Werkstoffe und Verbundmaterialien auf der Basis von Cellulose und besonders von Holzspänen, insbesondere Spanplatten.

Obgleich derzeit bereits weltweit Harnstoff-Formaldehyd-Leimtypen der Formaldehyd-Emissionsklasse E-1, (d.h. mit einer Formaldehyd-Emission von bis zu 10 mg pro 100 g Holzspan platte) erzeugt und verwendet werden, zielen die Bestrebungen insbesondere aus ökologischen und physiologischen Gründen dahin, die Formaldehyd-Emission aus entsprechenden agglomerierten Werkstoffen auf einen Wert von weniger als 5 mg Formaldehyd pro 100 g des betreffenden Werkstoffs, d.h. auf die Formaldehyd-Emissionsklasse E-0, herabzusetzen.

Die Herstellung eines Leims als Bindemittel für derartige Materialien mit einer solchen verringerten Formaldehyd-Emission der Emissionsklasse E-0 auf der Basis von Harnstoff-Formaldehyd Kondensationsprodukten stellt allerdings ein derart kompliziertes technisches Problem dar, daß bisher kein Verfahren zur Herstellung eines solchen Leims entwickelt werden konnte, so daß entsprechend bisher keine Leime der Formaldehyd-Emissionsklasse E-0 verfügbar sind.

Im Rahmen der Erfindung wurde nun in überraschender Weise festgestellt, daß sich durch ein dreistufiges Kondensationsverfahren, bei dem Phenol-Formaldehyd-Kondensationsprodukte, Trimethyloltrimethylentriamin sowie Formaldehyd und Harnstoff eingesetzt werden, erstmals Leime erzeugen lassen, die der Formaldehyd-Emissionsklasse E-0 entsprechen.

Der Erfindung liegt entsprechend die Aufgabe zugrunde, Leime der Formaldehyd-Emissionsklasse E-0 auf der Basis von Harnstoff-Formaldehyd-Kondensationsproduktn, Verfahren zu ihrer Herstellung und ihre Verwendung sowie daraus hergestellte Produkte anzugeben.

Die Aufgabe wird anspruchsgemäß gelöst. Die abhängigen Ansprüche betreffen vorteilhafte Ausführungsformen der Erfindungskonzeption.

Das erfindungsgemäße Verfahren zur Herstellung von Leimen auf der Basis von Harnstoff-Formaldehyd-Kondensationsprodukten und mit der Formaldehyd-Emissionsklasse E-0 ist durch folgende Schritte gekennzeichnet:

(A) Herstellung eines Vorkondensationsprodukts durch Umsetzung
- eines Phenol-Formaldehyd-Kondensationsprodukts
  mit
- Formaldehyd,

- Harnstoff
  und
- Trimethyloltrimethylentriamin,

(B) erste Nachkondensation des Vorkondensationsprodukts bei erhöhter Temperatur und

(C) zweite Nachkondensation des in Schritt B erhaltenen Kondensationsprodukts bei erhöhter Temperatur unter Zusatz von Harnstoff sowie von Phenol-Formaldehyd-Kondensationsprodukt.

Beim erfindungsgemäßen Verfahren werden entsprechend drei Vorkondensationsprodukte eingesetzt: In Schritt A das Phenol-Formaldehyd-Kondensationsprodukt sowie das Trimethyloltrimethylentriamin und in Schritt B das in Schritt A hergestellte Vorkondensationsprodukt, das aus den beiden genannten Kondensationsprodukten sowie Formaldehyd und Harnstoff erhalten ist. In den Schritten B und C erfolgt eine Nachkondensation des in Schritt A erhaltenen Vorkondensationsprodukts bei erhöhter Temperatur, wobei im zweiten Nachkondensationsschritt C eine weitere Modifizierung durch Zusatz von Harnstoff sowie von Phenol-Formaldehyd-Kondensationsprodukt erfolgt.

Durch diese Maßnahmen werden in völlig überraschender Weise Leime erhalten, die sich, nach Verarbeitung, durch eine extrem niedrige Formaldehyd-Emission von erheblich weniger als 5 mg Formaldehyd pro 100 g agglomeriertes Material auszeichnen.

Die Erfindung wird im folgenden anhand von Ausführungsbeispielen näher erläutert, wobei zunächst die Herstellung der drei obengenannten, in den Schritten A und B eingesetzten Kondensationsprodukte erläutert wird.

Herstellung des Phenol-Formaldehyd-Kondensationsprodukts

Das in den Schritten A und C eingesetzte Phenol-Formaldehyd-Kondensationsprodukt wird vorteilhaft durch Umsetzung von Phenol und Formaldehyd, insbesondere in Form von Formalinlösung, besonders mit einer Konzentration von etwa 37 %, im Molverhältnis 1:(0,6 bis 1,1) und vorzugsweise 1:1 in Gegenwart von Alkali- und/oder Erdalkalimetallhydroxiden hergestellt, z.B. in Gegenwart von Natriumhydroxid. Das Molverhältnis des Alkali- bzw. Erdalkalihydroxids zu Phenol beträgt (0,2 bis 0,8):1 und vorzugsweise 0,5:1. Die Reaktionstemperatur bei dieser Umsetzung liegt günstigerweise im Bereich von 40 bis 60 °C und vorzugsweise bei etwa 50 °C. Die Kondensationsreaktion wird während einer Reaktionsdauer von 0,5 bis 4 h und vorzugsweise 1 h durchgeführt. Dabei resultiert ein Phenol-Formaldehyd-Kondensationsprodukt, das einen Phenolalkohol bzw. ein Gemisch von Phenolalkoholen darstellt.

Herstellung von Trimethyloltrimethylentriamin

Das in Schritt A eingesetzte Trimethyloltrimethylentriamin wird durch Umsetzung von Formaldehyd, insbesondere in Form von Formalinlösung und besonders einer Konzentration von etwa 37 %, und Ammoniak im Molverhältnis 2:1 hergestellt. Die Reaktionstemperatur bei dieser Umsetzung liegt im Bereich von 30 bis 60 °C und vorzugsweise bei etwa 50 °C. Der resultierende pH-Wert des erhaltenen Produkts liegt im Bereich von 10,6 bis 11,2.

Herstellung des Vorkondensationsprodukts

Das Vorkondensationsprodukt wird gemäß Schritt A durch Umsetzung des Phenol-Formaldehyd-Kondensationsprodukts mit Formaldehyd und Harnstoff sowie mit Trimethyloltrimethylentriamin hergestellt. Dabei kann es vorteilhaft sein, zunächst das Phenol-Formaldehyd-Kondensationsprodukt mit Formaldehyd und Harnstoff vorumzusetzen und anschließend das erhaltene Produkt mit Trimethyloltrimethylentriamin zur Reaktion zu bringen.

In Schritt A wird der Formaldehyd mit dem Harnstoffmolverhältnis von (1,6 bis 2,1):1 und vorzugsweise von 1,8:1 eingesetzt. Dabei wird der Formaldehyd bevorzugt als Formalinlösung verwendet, besonders mit einer Konzentration von 37 Masse-%. In einem solchen Fall wird z.B. 37 %-ige Formalinlösung in einer Menge von 22,1 m³ auf 10 t festem Harnstoff eingesetzt.

Das Phenol-Formaldehyd-Kondensationsprodukt wird ferner in einer Menge von 1 bis 50 l und vorzugsweise etwa 16 l pro 10 t eingesetztem Harnstoff zugegeben. Die Menge an eingesetztem Trimethyloltrimethylentriamin beträgt 1,6 bis 5,0 m³ und vorzugsweise 1,6 bis 3,8 m³ und noch bevorzugter etwa 2,6 m³ pro 10 t eingesetztem Harnstoff.

Der pH-Wert des resultierenden Gemischs soll 8,7 bis 9,8 betragen und beträgt vorzugsweise 9,3.

Die Herstellung des Phenol-Formaldehyd-Kondensationsprodukts, die Herstellung des Trimethyloltrimethylentriamins sowie der Schritt A werden üblicherweise diskontinuierlich durchgeführt, während die Schritte B und C vorteilhaft kontinuierlich durchgeführt werden, wobei sie in dem gleichen oder in aufeinanderfolgenden verschiedenen Reaktoren vorgenommen werden können.

Schritt B wird günstigerweise bei einer Temperatur von 80 bis 135 °C und unter einem gegenüber Atmosphärendruck erhöhten Druck durchgeführt, bis eine Viskosität des erhaltenen Vorkondensationsprodukts von 20 bis 120 mPa•s und vorzugsweise von 30 bis 45 mPa•s erreicht ist.

Die zweite Nachkondensation in Schritt C wird günstigerweise bei einer Temperatur von 40 bis 80 °C und vorzugsweise etwa 60 °C unter gegenüber Atmosphärendruck vermindertem Druck, d.h. unter Vakuum, durchgeführt. Hierdurch wird gleichzeitig, neben der Kondensationsreaktion, ein Verdampfen insbesondere von Wasser und damit ein Eindampfeffekt erzielt, so daß in Schritt C ein Leim mit einem erwünschten Trockensubstanzgehalt erhalten werden kann, der vorteilhaft 60 bis 80 Masse-% und noch bevorzugter mindestens 65 Masse-% beträgt.

In Schritt B wird das Vorkondensationsprodukt vorteilhaft zur Durchführung der ersten Nachkondensation in einen ersten, kontinuierlich arbeitenden Reaktor eingespritzt, wo die Nachkondensation erfolgt. Nach dem Erreichen der vorgegebenen Viskosität wird das Reaktionsprodukt dann in Schritt C der zweiten Nachkondensation unterworfen, die unter den oben angegebenen Bedingungen erfolgt.

In Schritt C wird zur zweiten Nachkondensation dem Kondensationsprodukt Harnstoff zugesetzt, und zwar günstigerweise in einer Menge von 14 bis 25 Masse-% und vorzugsweise von 17,5 Masse-%, bezogen auf die Masse des Kondensationsprodukts und des ebenfalls zugesetzten Phenol-Formaldehyd-Kondensationsprodukts, das seinerseits in einer solchen Menge zugegeben wird, daß der pH-Wert des resultierenden Leims im Bereich von 6,8 bis 8,5 liegt. Hierzu sind unter den oben angegebenen beispielhaften Verhältnissen Mengen im Bereich von 10 bis 100 l und vorzugsweise von etwa 25 l erforderlich, um den pH-Wert auf den angegebenen Bereich abzupuffern.

Die zweite Nachkondensation wird vorteilhaft unter vermindertem Druck derart durchgeführt, daß keine nachgeschaltete weitere Aufkonzentrierung des erhaltenen Leims mehr erforderlich ist.

Abschließend wird der erhaltene Leim auf Umgebungstemperatur abgekühlt, d.h. z.B. auf eine Temperatur im Bereich von etwa 15 bis 25 °C, und erforderlichenfalls gelagert.

Die Erfindung wird im folgenden anhand von Ausführungsbeispielen näher erläutert.

Beispiel 1

In einem Rührbehälter wurden 22,1 m³ Formalinlösung (37 %), 10 l Phenol-Formaldehyd-Kondensationsprodukt, 10 t Harnstoffgranulat und anschließend 2,6 m³ Trimethyloltrimethylentriaminlösung umgesetzt.

Das so erhaltene Vorkondensationsprodukt wurde zunächst auf einer Temperatur von 10 bis 30 °C und auf einem pH-Wert von 9,3 gehalten. Das so erhaltene Vorkondensationsprodukt wurde anschließend bei einem Durchsatz von 10 m³/h in einen ersten, kontinuierlich arbeitenden Reaktor eingespritzt. Hierfür können vorteilhaft Schlaufenreaktoren, Strömungsrohrreaktoren, Rührkessel bzw. Rührkesselkaskaden und andere vergleichbare Reaktoren sowie in einem geschlossenen Kreislauf arbeitende Reaktoren eingesetzt werden. Gleiches gilt prinzipiell auch für den nachgeschalteten zweiten Nachkondensationsschritt.

Die Kondensation in Schritt B wurde bei 117 °C durchgeführt. Nach Erreichen einer Viskosität von 40 mPa·s wurde das Reaktionsprodukt in einen zweiten, ebenfalls kontinuierlich betriebenen Reaktor eingeführt, wobei gleichzeitig Phenol-Formaldehyd-Kondensationsprodukt in Form einer entsprechenden Lösung bei einem Durchsatz von 16 l/h sowie Harnstofflösung (60 %) bei einem Durchsatz von 2,6 m$^3$/h zugesetzt wurden. Der zweite Reaktor arbeitete unter vermindertem Druck. Die Reaktionstemperatur betrug in Schritt C 63 °C. Nach dem Erreichen eines Trockensubstanzgehalts im Bereich von 65 bis 67 % wurde der Leim über einen Kühler in einen Vorratsbehälter geleitet.

Beispiel 2

In einem Rührbehälter wurden 1108 kg Formalin, 0,8 l Phenol-Formaldehyd-Kondensationsprodukt, 450 kg Harnstoffgranulat und 117 kg Trimethyloltrimethylentriamin bei 30 °C umgesetzt. Das erhaltene Gemisch wurde dann auf 105 °C erwärmt und bis zum Erreichen einer Viskosität von 40 mPa·s kondensiert. Nach dem Erreichen dieses Viskositätswerts wurde das Reaktionsgemisch abgekühlt und mit 275 kg Harnstoff und 0,3 l Phenol-Formaldehyd-Additionsprodukt-Lösung versetzt. Abschließend wurde das Produkt unter vermindertem Druck behandelt und aufkonzentriert. Das erhaltene Produkt, das einen Trockensubstanzgehalt von 65 Masse-% aufwies, wurde nach dem Abkühlen in einen Vorratsbehälter abgelassen.

Die erfindungsgemäßen Leime eignen sich aufgrund ihrer extrem geringen Formaldehyd-Emission, die erstmalig der Emissionsklasse E-0 entspricht, in besonderer Weise zur Herstellung von Verbundwerkstoffen und agglomerierten Werkstoffen, besonders auf Cellulosebasis und besonders von Holzspänen, d.h. insbesondere zur Herstellung von Spanplatten, die sich aufgrund der sehr geringen Formaldehyd-Emission sehr günstig zur Verwendung in Innenräumen bzw. geschlossenen Räumen eignen, insbesondere also zur Möbelproduktion.

**Patentansprüche**

1. Verfahren zur Herstellung von Leimen auf der Basis von Harnstoff-Formaldehyd-Kondensationsprodukten der Formaldehyd-Emissionsklasse E-0, gekennzeichnet durch folgende Schritte:

(A) Herstellung eines Vorkondensationsprodukts
durch Umsetzung
- eines Phenol-Formaldehyd-Kondensationsprodukts
mit
- Formaldehyd,
- Harnstoff
und
- Trimethyloltrimethylentriamin,
(B) erste Nachkondensation des Vorkondensationsprodukts bei erhöhter Temperatur
und
(C) zweite Nachkondensation des in Schritt B erhaltenen Kondensationsprodukts bei erhöhter Temperatur unter Zusatz von Harnstoff sowie von Phenol-Formaldehyd-Kondensationsprodukt.

2. Verfahren nach Anspruch 1, dadurch gekennzeichnet, daß das in den Schritten A und C eingesetzte Phenol-Formaldehyd-Kondensationsprodukt durch Umsetzung von Phenol und Formaldehyd, insbesondere in Form von Formalinlösung, im Molverhältnis 1:(0,6 bis 1,1) und vorzugsweise 1:1 in Gegenwart von Alkali- und/oder Erdalkalimetallhydroxiden hergestellt wird.

3. Verfahren nach Anspruch 1 oder 2, dadurch gekennzeichnet, daß das in Schritt A eingesetzte Trimethyloltrimethylentriamin durch Umsetzung von Formaldehyd, insbesondere in Form von Formalinlösung, und Ammoniak im Molverhältnis 2:1 hergestellt wird.

4. Verfahren nach den Ansprüchen 1 bis 3, dadurch gekennzeichnet, daß die Herstellung des Phenol-Formaldehyd-Kondensationsprodukts, die Herstellung des Trimethyloltrimethylentriamins und der Schritt A diskontinuierlich und/oder die Schritte B und C kontinuierlich durchgeführt werden.

5. Verfahren nach einem der Ansprüche 1 bis 4, dadurch gekennzeichnet, daß die erste Nachkondensation in Schritt B bei einer Temperatur von 80 bis 135 °C und unter gegenüber Atmosphärendruck erhöhtem Durck durchgeführt wird, bis eine Viskosität von 20 bis 120 mPa·s und vorzugsweise von 30 bis 45 mPa·s erreicht ist.

6. Verfahren nach einem der Ansprüche 1 bis 5, dadurch gekennzeichnet, daß die zweite Nachkondensation in Schritt C bei einer Temperatur von 40 bis 80 °C und vorzugsweise 60 °C unter gegenüber Atmosphärendruck vermindertem Druck durchgeführt wird.

7. Verfahren nach Anspruch 6, dadurch gekennzeichnet, daß bei der zweiten Nachkondensation in Schritt C der Harnstoff in einer Menge von 14 bis 25 Masse-% und vorzugsweise 17,5 Masse-%, bezogen auf die Masse an eingesetztem Kondensationsprodukt und Phenol-Formaldehyd-Kondensationsprodukt, eingesetzt wird und das Phenol-Formaldehyd-Kondensationsprodukt in einer solchen Menge zugegeben wird, daß der pH-Wert des resultierenden Leims 6,8 bis 8,5 beträgt.

8. Verfahren nach einem der Ansprüche 1 bis 7, dadurch gekennzeichnet, daß in Schritt A zunächst das Phenol-Formaldehyd-Kondensationsprodukt mit Formaldehyd und Harnstoff vorumgesetzt wird und das erhaltene Produkt anschließend mit dem Trimethyloltrimethylentriamin umgesetzt wird.

9. Verfahren nach einem der Ansprüche 1 bis 6, dadurch gekennzeichnet, daß in Schritt A die Reaktionskomponenten in folgenden Mengen bzw. Mengenverhältnissen eingesetzt werden:
   - Phenol-Formaldehyd-Kondensationsprodukt in einer Menge von 1 bis 50 l und vorzugsweise 16 l pro 10 t eingesetztem Harnstoff;
   - Formaldehyd in einer Menge von 1,6 bis 2,1 mol und vorzugsweise 1,8 mol pro Mol eingesetztem Harnstoff, bzw. Formaldehyd als 37 %-ige Formalinlösung in einer Menge von 22,1 m$^3$ pro 10 t eingesetztem Harnstoff;
   - Trimethyloltrimethylentriamin in einer Menge von 1,6 bis 5,0 m$^3$ und vorzugsweise 1,6 bis 3,8 m$^3$ und noch bevorzugter von 2,6 m$^3$ pro 10 t eingesetztem Harnstoff.

10. Leim, insbesondere zum Verleimen von zu agglomerierenden Werkstoffen, insbesondere Materialien auf Cellulosebasis und besonders von Holzspänen, vorzugsweise zur Herstellung von Spanplatten,
    erhältlich nach dem Verfahren gemäß einem oder mehreren der Ansprüche 1 bis 9, vorzugsweise mit einem Trockensubstanzgehalt von 60 bis 80 Masse-% und noch bevorzugter von 65 Masse-% und darüber.

11. Agglomerierte Werkstoffe und Verbundmaterialien, insbesondere aus Materialien auf Cellulosebasis und besonders aus Holzspänen, vorzugsweise Spanplatten, dadurch gekennzeichnet, daß sie unter Verwendung eines Leims nach einem oder mehreren der Ansprüche 1 bis 5 hergestellt sind.

## Europäisches Patentamt

# EUROPÄISCHER RECHERCHENBERICHT

Nummer der Anmeldung

**EP 91 11 7363**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 282 903 (BASF AKTIENGESELLSCHAFT) <br> * Ansprüche 1-6 * * <br> – – – | 1-11 | C 08 G 14/08 <br> C 09 J 161/34 |
| A | CHEMICAL ABSTRACTS, vol. 108, no. 22, 30. Mai 1988, Columbus, Ohio, US; abstract no. 187815H, KELLNER ET AL.: 'Manufacture of phenol-formaldehyde resin binders with low free monomer content' Seite 37 ;Spalte 1 ; <br> * Zusammenfassung * * <br> – – – | 1-11 | |
| A | CHEMICAL ABSTRACTS, vol. 111, no. 20, 13. November 1989, Columbus, Ohio, US; abstract no. 175375P, KELLNER ET AL.: 'Manufacture of urea-formaldehyde condensates.' Seite 55 ;Spalte 1 ; <br> * Zusammenfassung * * <br> – – – – – | 1-11 | |

| RECHERCHIERTE SACHGEBIETE (Int. Cl.5) |
|---|
| C 08 G <br> C 09 J |

Der vorliegende Recherchenbericht wurde für alle Patentansprüche erstellt

| Recherchenort | Abschlußdatum der Recherche | Prüfer |
|---|---|---|
| Den Haag | 05 Dezember 91 | GLANDDIER A. |